(19) Europäisches Patentamt
European Patent Office
Office européen des brevets

(11) EP 1 083 323 A2

(12) **EUROPEAN PATENT APPLICATION**

(43) Date of publication:
**14.03.2001 Bulletin 2001/11**

(51) Int. Cl.[7]: **F02D 41/02**, F01N 11/00

(21) Application number: **00119610.4**

(22) Date of filing: **07.09.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **09.09.1999 JP 25617299**

(71) Applicant:
**TOYOTA JIDOSHA KABUSHIKI KAISHA**
**Aichi-ken 471-8571 (JP)**

(72) Inventors:
- **Kitamura, Tooru**
  **Toyota-shi, Aichi-ken 471-8571 (JP)**
- **Mashiki, Zenichiro**
  **Toyota-shi, Aichi-ken 471-8571 (JP)**

(74) Representative:
**Pellmann, Hans-Bernd, Dipl.-Ing. et al**
**Patentanwaltsbüro**
**Tiedtke-Bühling-Kinne**
**Bavariaring 4**
**80336 München (DE)**

(54) **Engine exhaust gas purification apparatus**

(57) An exhaust gas purification apparatus (60) estimates the amount (sNox) of NOx stored in a NOx catalytic converter (49) arranged in an exhaust passage (48) of an engine (2), based on an operating state of the engine. When the amount of stored NOx is greater than a predetermined storage limit (NoxCAP), the concentration of fuel in the air fuel mixture is increased so that the fuel concentration becomes higher than that of a stoichiometric mixture in order to reduce the amount of stored NOx. The apparatus includes a fuel cutting means (60, 22) that cuts the supply of fuel to the engine based on the operating state of the engine. A stored NOx reduction means (60, 22, 46) temporarily increases the fuel concentration of the air fuel mixture so that the fuel concentration becomes higher than that of a stoichiometric mixture at one point in a period from when the fuel cut is terminated to just before the stored amount of NOx exceeds the predetermined storage limit.

**Fig.1**

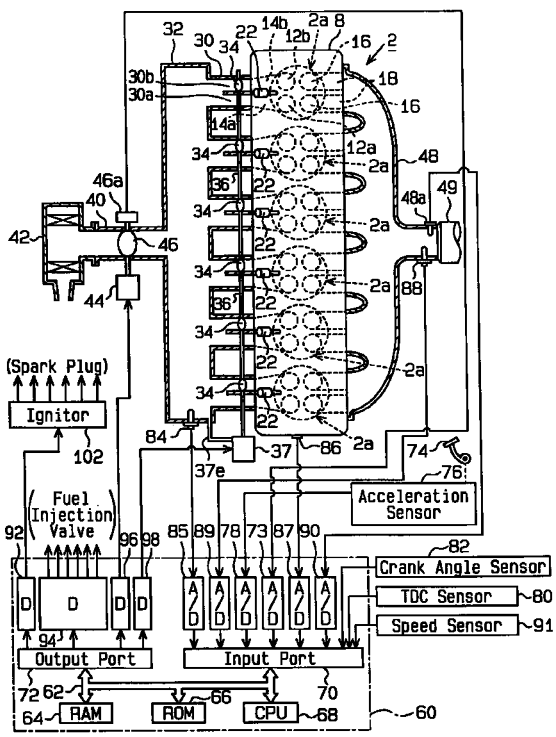


EP 1 083 323 A2

## Description

### BACKGROUND OF THE INVENTION

The present invention relates to an apparatus for purifying exhaust gases in engines, and more particularly, to an engine exhaust gas purification apparatus that decreases the storage amount of nitrogen oxide in an NOx catalytic converter located in an exhaust passage of an engine.

Japanese Patent 2586739 describes an exhaust gas purification apparatus which reduces the amount of nitrogen oxide (Nox) stored in a NOx storage reduction catalytic converter (NOx catalytic converter). The NOx catalytic converter stores the NOx included in the exhaust gas of an engine. When the storage amount of NOx saturates the NOx catalytic converter, the fuel concentration in the air fuel mixture is increased so that the air fuel ratio of the mixture becomes lower than the stoichimetric air fuel ratio. This reduces and eliminates the NOx in the NOx catalytic converter. In this manner, the NOx catalytic converter is repetitively regenerated. Thus, NOx components suspended in the exhaust gas are effectively eliminated and satisfactory emissions are produced.

Two types of data are necessary to determine whether or not the NOx catalytic converter is saturated. One is the current amount of NOx stored in the NOx catalytic converter and the other is a storage limit value, which indicates the tolerable limit of the amount of NOx that can be stored in the NOx catalytic converter. In the exhaust gas purification apparatus, the data of the storage limit value is predetermined, and the stored NOx amount is estimated from the operating state of the engine.

The storage limit value varies in accordance with the temperature of the NOx catalytic converter. Thus, the storage limit value is obtained in accordance with the temperature of the NOx catalytic converter. The temperature of the NOx catalytic converter is estimated from, for example, the exhaust gas temperature or the operating state of the engine.

If the stored NOx amount becomes greater than the storage limit value, the exhaust gas purification apparatus temporarily increases the fuel concentration of the air fuel mixture so that the air fuel ratio becomes less than the stoichiometric air fuel ratio. This produces carbon monoxide (CO) and hydrocarbon (HC) in the exhaust gas. The carbon monoxide and hydrocarbon then reduce the amount of NOx in the NOx catalytic converter. This desaturates and regenerates the NOx catalytic converter. Such air fuel ratio control is referred to as rich spike control.

To increase the fuel efficiency of the engine, for example, fuel is not supplied to the engine when the vehicle is decelerating. This is referred to as fuel cut control.

If the storage limit value is set in accordance with the estimated temperature of the NOx catalytic converter when the engine is released from a fuel cut state, that is, when fuel cut control is no longer performed, the storage limit value is set at a value that is greater than the amount of NOx that can actually be stored in the NOx catalytic converter. In other words, the fuel cut control inhibits combustion and decreases the temperature of the NOx catalytic converter. Thus, the estimated temperature of the NOx catalytic converter differs from the actual temperature when the fuel cut control is terminated. As a result, the storage limit value, which is set based on the estimated temperature, is greater than the appropriate value. This delays the timing at which the rich spike control is initiated after termination of the fuel cut control. In other words, the NOx catalytic converter remains saturated for a certain period. During this period, NOx is not stored by the NOx catalytic converter and the engine emission becomes undesirable.

### SUMMARY OF THE INVENTION

It is an object of the present invention to provide an engine exhaust gas purification apparatus which prevents the engine emission from becoming undesirable due to saturation of the NOx catalytic converter.

To achieve the above object, the present invention provides an engine exhaust gas purification apparatus that estimates the amount of NOx stored in a NOx catalytic converter, which is arranged in an exhaust passage of an engine, based on an operating state of the engine. When the stored NOx amount is greater than a predetermined storage limit, the apparatus temporarily increases the concentration of fuel in an air fuel mixture so that the fuel concentration becomes higher than that of a stoichiometric mixture to reduce the stored NOx amount. The apparatus includes a fuel cutting means for cutting the supply of fuel to the engine in accordance with the operating state of the engine. A stored NOx reduction means temporarily increases the fuel concentration of the air fuel mixture so that the fuel concentration becomes higher than that of a stoichiometric mixture at one point in a period from when the fuel cut is terminated to just before the stored NOx amount exceeds the predetermined storage limit.

A further aspect of the present invention provides a method for purifying exhaust gas in an engine provided with a NOx catalytic converter. The method includes estimating the amount of NOx in the NOx catalytic converter based on an operating state of the engine, temporarily increasing the concentration of fuel in an air fuel mixture so that the fuel concentration becomes higher than that of a stoichiometric mixture when the stored NOx amount is greater than a predetermined storage limit, cutting the supply of fuel to the engine in accordance with the operating state of the engine, and temporarily increasing the fuel concentration of the air fuel mixture so that the fuel concentration becomes higher than that of a stoichiometric mixture at one point in a period from when the fuel cut is terminated to just before the amount of stored NOx exceeds the predetermined storage limit.

Other aspects and advantages of the present invention will become apparent from the following description, taken in conjunction with the accompanying drawings, illustrating by way of example the principles of the invention.

## BRIEF DESCRIPTION OF THE DRAWINGS

The invention, together with objects and advantages thereof, may best be understood by reference to the following description of the presently preferred embodiments together with the accompanying drawings in which:

Fig. 1 is a schematic block diagram showing an engine incorporating an exhaust gas purification apparatus according to a first embodiment of the present invention;

Fig. 2 is a partial cross-sectional view of a cylinder head of Fig. 1;

Fig. 3 is a plan view showing the top of a piston of Fig. 1;

Fig. 4 is a cross-sectional view taken along line 4-4 in Fig. 2;

Fig. 5 is a cross-sectional view taken along line 5-5 in Fig. 2;

Fig. 6 is a flowchart showing a routine for setting an operational range in the first embodiment;

Fig. 7 is a graph showing a map used to calculate a lean fuel injection amount;

Fig. 8 is a graph showing a map used to set the operational range;

Fig. 9 is a flowchart showing a routine for controlling fuel injection timing in the first embodiment;

Fig. 10 is a flowchart showing a routine for controlling fuel injection amount in the first embodiment;

Fig. 11 is a flowchart showing a routine for performing fuel cut in the first embodiment;

Fig. 12 is a graph showing a map used to calculate a basic fuel injection amount in the first embodiment;

Fig. 13 is a flowchart showing a routine for calculating a large load increase in the first embodiment;

Fig. 14 is a flowchart showing a routine for calculating the stored NOx amount in the first embodiment;

Fig. 15 is a graph showing a map used to calculate the NOx emission amount;

Fig. 16 is a graph showing data distribution of the map of Fig. 15;

Fig. 17 is a graph showing a storage limit value NoxCAP in the first embodiment;

Fig. 18 is a graph showing a map used to calculate intake air amount G in the first embodiment;

Fig. 19 is a graph showing a map used to calculate surplus fuel amount in the first embodiment;

Fig. 20 is a flowchart showing a rich spike routine of the first embodiment;

Fig. 21 is a flowchart showing a routine for determining the execution of the rich spike routine when terminating fuel cut in the first embodiment;

Fig. 22 is a graph showing the value distribution of a table used to obtain the increase margin dRnox in the first embodiment; and

Fig. 23 is a flowchart showing a rich spike routine executed when terminating fuel cut in a second embodiment according to the present invention.

## DETAILED DESCRIPTION OF THE PREFERRED EMBODIMENTS

[First Embodiment]

With reference to Fig. 1, a gasoline engine 2, which is a direct cylinder injection type engine installed in an automobile, has six cylinders 2a. As shown in Figs. 2 to 5, each of the cylinders 2a has a combustion chamber 10 defined by a cylinder block 4, a piston 6, and a cylinder head 8, which is mounted on the cylinder block 4.

A first intake valve 12a, a second intake valve 12b, and a pair of exhaust valves 16 are arranged in each combustion chamber 10. The first intake valve 12a is connected to a first intake port 14a, the second intake valve 12b is connected to a second intake port 14b, and the two exhaust valves 16 are connected to two exhaust ports 18, respectively.

As shown in Fig. 2, the first and second intake ports 14a, 14b extend in a relatively straight manner. A spark plug 20 is arranged on the inner wall of the cylinder head 8 at the center of the combustion chamber 10. A fuel injection valve 22 is located in the vicinity of the first intake valve 12a and the second intake valve 12b to inject fuel directly into the combustion chamber 10.

With reference to Figs. 3 to 5, the top of the piston 6, which is generally conical, includes a concave portion 24 having a dome-like cross-section.

As shown in Fig. 1, the first intake port 14a of each cylinder 2a is connected to a surge tank 32 via a first intake passage 30a extending through an intake manifold 30. The second intake port 14b is connected to the surge tank 32 via a second intake passage 30b extending through the intake manifold 30. A current control valve 34 is arranged in each second intake passage 30b. The current control valves 34 are each connected to a common shaft 36. An actuator 37 drives the shaft 36 and operates the current control valves 34. When the current control valves 34 are closed, intake air is drawn through only the first intake ports 14a. This produces a strong swirling current S in the associated combustion chamber 10 (Fig. 2).

The surge tank 32 is located to an air cleaner 42 by an intake duct 40. A throttle valve 46 driven by a motor 44 (DC motor or stepping motor) is located in the intake duct 40. The opened amount of the throttle valve 46 (throttle angle TA) is detected by a throttle sensor 46a and controlled in accordance with the engine operating state. The exhaust ports 18 of each cylinder 2a are connected to the exhaust manifold 48.

The exhaust manifold 48 is connected to a catalytic converter 49 for purifying the exhaust gas. The catalytic converter 49 contains a NOx storage reduction catalyst (NOx catalyst). The NOx catalyst employs, for example, alumina as a carrier. The carrier carries, for example, a precious metal (e.g., platinum) and at least one selected from a group consisting of an alkaline metal (e.g., potassium, sodium, lithium, and cesium), an alkaline earth metal (e.g., barium and calcium), and a rare earth (e.g., lanthanum and yttrium). The NOx catalyst stores NOx when the exhaust gas has a lean air fuel ratio. When the exhaust gas becomes rich and decreases the air fuel ratio, the NOx catalyst cooperates with the HC and CO suspended in the exhaust gas to reduce the NOx to nitrogen gas and discharge the nitrogen gas from the catalytic converter 49.

A fuel distribution pipe (not shown) is arranged on the cylinder head 8 near the first and second intake valves 12a, 12b. The fuel distribution pipe is connected to the fuel injection valves 22. When performing stratified charge combustion and homogeneous charge combustion, the fuel injection valves 22 directly inject the fuel supplied from the fuel distribution pipe into associated ones of the combustion chambers 10. A high pressure fuel pump (not shown) sends highly pressurized fuel to the fuel distribution pipe.

An electronic control unit (ECU) 60, which is a digital computer or processor, includes a random access memory (RAM) 64, a read only memory (ROM) 66, a microprocessor or a central processing unit (CPU) 68, an input port 70, and an output port 72, which are connected to one another by a bidirectional bus 62.

The throttle sensor 46a, which detects the throttle angle TA, provides the ECU 60 with an output voltage proportional to the detected throttle angle TA via an analog to digital or A/D converter 73. An acceleration sensor 76 attached to an acceleration pedal 74 provides the ECU 60 with a voltage proportional to the depressed amount of the acceleration pedal 74 via an A/D converter 78. A top dead center sensor 80 generates, for example, an output pulse when the piston 6 in the first cylinder 2a reaches the top dead center position during the intake stroke and provides the output pulse to the ECU 60. A crank angle sensor 82 generates an output pulse whenever a crankshaft is rotated by 30 degrees and provides the output pulse to the ECU 60. The CPU 68 calculates the present crank angle from the output pulses of the top dead center and crank angle sensors 80, 82. Further, the CPU 68 calculates the engine speed NE from the frequency of the output pulses generated by the crank angle sensor 82. An intake pressure sensor 84 detects the intake pressure PM of the surge tank 32 (the pressure of the intake air, absolute pressure) and provides a corresponding output signal to the ECU 60 via an A/D converter 85. A coolant temperature sensor 86 is arranged on the cylinder block 4 to detect the coolant temperature THW of the engine 2 and provide a corresponding output signal to the ECU 60 via an A/D converter 87. An air fuel ratio sensor 88 is arranged on the exhaust manifold 48 and provides an output signal corresponding to the air fuel ratio to the ECU 60 via an AC converter 89. An exhaust gas temperature sensor 48a is arranged on the exhaust manifold 48 and provides an output signal corresponding to the exhaust gas temperature T to the ECU 60 via an A/D converter 90. A vehicle speed sensor 91 is arranged on an output shaft of an automatic transmission (not shown) and provides output pulses to the ECU 60. The CPU 68 calculates the vehicle speed V from the frequency of the output pulses.

An ignitor 102, the fuel injection valves 22, the throttle valve motor 44, and the actuator 37 are connected to the output port 72 by respective drive circuits 92, 94, 96, and 98.

Fuel injection control performed after the starting of the engine 2 will now be discussed.

When commencing the fuel injection control, an operational range is determined through the routine of Fig. 6. The routine is executed for every predetermined crank angle.

At step S100, the engine speed NE and the depressed amount of the acceleration pedal 74, or the acceleration pedal depression ACCP, which is obtained from the acceleration sensor 76, are read by the ECU 60 and stored in the RAM 64.

Then, at step S110, the ECU 60 determines a lean fuel injection amount QL based on the engine speed NE and the acceleration pedal depression ACCP. The lean fuel injection amount QL represents the fuel injection amount optimal for matching the output torque of the engine 2 with the required torque when performing stratified charge combustion. The lean fuel injection amount QL is obtained from a map (Fig. 7), the parameters of which are the acceleration pedal depression ACCP and the engine speed NE. The map of Fig. 7 is obtained experimentally and stored in the ROM 66. Since values are dispersed throughout the map, a value corresponding to the parameters read by the RAM 64 may not exist on the map. In this case, QL is calculated through interpolation. Such interpolation is carried out when referring to maps other than that of Fig. 7.

At step S115, based on the lean fuel injection amount QL and the engine speed NE, the ECU 60 determines three operational ranges R1, R2, R3, which are shown in Fig. 8. The operational ranges R1, R2, R3 are defined by a first threshold value QQ1 and a second threshold value QQ2 (Fig. 8). The routine is then temporarily terminated.

After determining the operational ranges R1, R2, R3, the ECU 60 executes a fuel injection timing control routine illustrated in the flowchart of Fig. 9 to control the fuel injection timing in accordance with the operational ranges R1-R3. The fuel injection control routine is executed for every predetermined crank angle.

At step S210, the ECU 60 determines whether a rich spike flag Fnox, which is set in a routine illustrated in Fig. 14, is OFF. If Fnox is OFF in step S210, the ECU 60 proceeds to step S220 and determines whether the engine 2 has been warmed up. The engine 2 is warmed up when the coolant temperature THW exceeds about 78°C.

If it is determined that the engine 2 has been warmed up in step S220, the ECU 60 proceeds to step S230 and determines whether the present engine operating state is in operational range R1.

If the present engine operating state is in the operational range R1, that is, if the lean fuel injection amount QL is smaller than the first threshold value QQ1 in step S230, the ECU 60 proceeds to step S240 and sets the fuel injection timing so that an amount of fuel corresponding to the lean fuel injection amount QL is injected during the final period of the compression stroke. The ECU 60 then temporarily terminates the fuel injection timing control routine.

The lean fuel injection amount QL in the operational range R1 is set so that the ratio between the intake air in each combustion chamber 10 and the lean fuel injection amount QL is less than the stoichiometric air fuel ratio. The fuel injected during the final period of the compression stroke enters the concave portion 24 of the piston 6 hitting a peripheral wall 26 (Figs. 3 and 4) formed about the concave portion 24. The fuel is gasified as it flows along the peripheral wall 26 thereby forming a layer of combustible air fuel mixture in the vicinity of the associated spark plug 20. The combustible mixture layer is then ignited by the spark plug 20 to perform stratified charge combustion.

If the engine operating state is not in the operational range R1 in step S230, the ECU 60 proceeds to step S250 and determines whether the present engine operating state is in the operational range R2. The operational range R2 is the range of the lean fuel injection amount QL between the first threshold value QQ1 and the second threshold value QQ2.

If the present engine operating state is in the operational range R2 in step S250, the ECU 60 proceeds to step S260 and sets the fuel injection timing so that fuel is injected twice, once during the intake stroke and once during the final period of the compression stroke. The total amount of the injected fuel during the two injections corresponds to the lean fuel injection amount QL. The lean fuel injection amount QL is less than the amount of fuel when the air fuel ratio is stoichiometric in the combustion chamber 10. The fuel of the first injection during the intake stroke enters each combustion chamber 10 together with intake air and forms a homogeneous lean air fuel mixture in the combustion chamber 10. The fuel of the second injection during the compression stroke forms a layer of combustible air fuel mixture in the concave portion 24 at the vicinity of the spark plug 20. The combustible mixture layer is ignited by the spark plug 20. This burns the lean mixture, which is spread throughout the combustion chamber 10. In other words, when in the operational range R2, stratified charge combustion is performed at a lower level of stratification than in the operational range R1.

If the engine operating state is not included in the operational range R2 in step S250, the operating state is included in the operational range R3. In this case, the ECU 60 proceeds to step S270 and sets the fuel injection timing and the fuel injection amount so that fuel, the amount of which has been compensated for in accordance with a basic fuel injection amount QBS (described later), is injected during the intake stroke. In this case, fuel enters each combustion chamber 10 together with the intake air and forms a homogeneous and stoichiometric air fuel mixture in the entire combustion chamber 10 to perform homogeneous charge combustion. However, when step S270 is performed, the fuel injection amount may be controlled so that incremental compensation of the injection amount causes the air fuel mixture to be richer than a stoichiometric mixture (described later).

If it is determined that the rich spike flag Fnox is ON in step S210 or that the engine 2 has not been warmed up in step S220, the ECU 60 proceeds to step S270 and sets the fuel injection timing and amount so that fuel, the amount of which has been compensated for in accordance with the basic fuel injection amount QBS, is injected during the intake stroke.

A fuel injection control routine is shown in the flowchart of Fig. 10. The routine is executed for every predetermined crank angle.

At step S310, the ECU 60 reads from the RAM 64 the acceleration pedal depression ACCP, the engine speed NE, the intake pressure PM, the coolant temperature THW, and an output voltage value Vox of the air fuel ratio sensor 88.

At step S320, the ECU 60 determines whether or not a fuel cut flag Fca is OFF.

A fuel cut routine for setting the fuel cut flag Fca will now be discussed with reference to Fig. 11. The fuel cut routine is executed cyclically in constant intervals.

At step S500, the ECU 60 determines whether the fuel cut conditions are satisfied. If the fuel cut conditions are satisfied in step S500, the ECU 60 proceeds to step S510 and sets the fuel cut flag Fca to ON. If the fuel cut conditions are not satisfied in step S500, the ECU 60 proceeds to step S520 and sets the fuel cut flag Fca to OFF.

The fuel cut conditions includes, for example, the conditions of the vehicle being decelerated, the engine speed NE being higher than a predetermined fuel cut speed, and the vehicle speed V being higher than a predetermined speed. Deceleration of the vehicle is determined from the acceleration pedal depression ACCP and the vehicle speed V.

Returning to the routine of Fig. 10, if the fuel cut flag Fca is ON in step S320, the ECU 60 proceeds to step S325 and sets the fuel injection amount Q to zero. The ECU 60 then temporarily terminates the fuel injection amount control routine. In this case, the supply of fuel to each combustion chamber 10 is inhibited. Further, an ignition control routine (not shown) is executed to inhibit the supply of high voltage to each spark plug 20.

If it is determined that the fuel cut flag Fca is OFF in step S320, the ECU 60 proceeds to step S330 and determines whether the rich spike flag Fnox is OFF.

If the rich spike flag Fnox is OFF in step S330, the ECU 60 determines whether the engine 2 has been warmed up. The ECU 60 assumes that the engine 2 is warmed up in step S340 if the coolant temperature THW exceeds about 78°C and proceeds to step S350. At step S350, the ECU 60 determines whether or not the present engine operating state is in the operational range R3. If it is determined that the engine operating state is in the operational range R3, the ECU 60 proceeds to step S360. At step S360, the ECU 60 refers to a map, which is stored in the ROM 66 and illustrated in Fig. 12, to obtain the basic fuel injection amount QBS from the intake pressure PM and the engine speed NE.

At step S370, the ECU 60 executes an OTP (over temperature protection) calculation routine, which is illustrated in Fig. 13. The OTP calculation routine will now be discussed.

First, at step S372, the ECU 60 determines whether or not the acceleration pedal depression ACCP is higher than a large load reference value KOTPAC.

If it is determined that the acceleration pedal depression ACCP is equal to or lower than the large load reference value KOTPAC in step S372, the ECU 60 proceeds to step S374 and sets a large load increase OTP to zero. The ECU 60 then temporarily terminates the routine. In this case, the supplied amount of fuel is not increased.

If it is determined that the acceleration pedal depression ACCP is greater than the large load reference value KOTPAC in step S372, the ECU 60 proceeds to step S376 and sets the large load increase OTP to value M (e.g., 1>M>0). The ECU 60 then temporarily terminates the OTP calculation routine. In this case, the supplied amount of fuel is increased (incremental fuel compensation). The incremental fuel compensation prevents the catalytic converter 49 from overheating when a high load is applied.

Returning to the routine of Fig. 10, after the OTP calculation routine is performed in step S370, the ECU 60 proceeds to step S380 and determines whether air fuel ratio feedback conditions are satisfied in step S380. The feedback conditions include, for example, (1) the engine 2 presently not being started, (2) the air fuel ratio sensor 88 having been activated, (3) the large load incremental amount OTP being zero, and (4) other requirements. The feedback conditions are satisfied when all of the conditions (1) to (4) are satisfied.

If it is determined that the feedback conditions are satisfied in step S380, the ECU 60 proceeds to step S390 and computes a feedback coefficient FAF and a learned value KG. The feedback coefficient FAF is computed from the output signal of the air fuel ratio sensor 88. The learned value KG is calculated from the difference between an average value of the feedback coefficient FAF over a predetermined period and a median value 1.0. Japanese Unexamined Patent Publication No. 6-10736 describes an example of the air fuel ratio feedback control using the feedback coefficient FAF and the learned value KG.

If it is determined that the feedback conditions are not satisfied in step S380, the ECU 60 proceeds to step S400 and sets the feedback coefficient FAF at 1.0.

At step S410, the fuel injection amount Q is calculated from formula (1).

$$Q=QBS\{1+OTP+(FAF-1.0)+(KG-1.0)\}\alpha+\beta \qquad (1)$$

In the formula, the coefficients of $\alpha$ and $\beta$ are set in accordance with the type of the engine 2 or the contents of the control performed.

In step S350, if it is determined that the engine operating state is not included in the operational range R3, the ECU 60 proceeds to step S420 and sets the lean fuel injection amount QL obtained in step S110 of the operational range setting routine (Fig. 6) as the fuel injection amount Q.

After setting the fuel injection amount Q in step S420, the ECU 60 temporarily terminates the fuel injection amount control routine.

If it is determined that the engine 2 has not yet been warmed up in step S340, the ECU 60 skips step S350 and sets the fuel injection amount Q through steps S360-410.

If it is determined that the rich spike flag Fnox is ON in step S330, the ECU 60 proceeds to step S800 and executes a rich spike control routine.

A routine for calculating the stored NOx amount to determine the rich spike flag Fnox will now be discussed (Fig. 14). The routine is executed for every predetermined crank angle.

At step S610, the ECU 60 determines whether or not lean combustion is being performed. In the first embodiment, lean combustion refers to stratified charge combustion, which is performed when in the operational range R1, and semi-stratified charge combustion, which is performed when in the operational range R2.

If it is determined that lean combustion is performed in step S610, the ECU 60 proceeds to step S615 and refers to a map shown in Fig. 15 to obtain the amount of NOx (dNox) emitted from the engine 2 per revolution of the engine crankshaft. The map of Fig. 15, the parameters of which are the lean fuel injection amount QL and the engine speed NE, is obtained experimentally and stored in the ROM 66. The value dNox is distributed as shown by the contour lines in Fig. 16. The value dNox increases as the engine speed NE or the lean fuel injection amount QL increases.

At step S620, the ECU 60 updates a storage amount sNox using formula (2). The NOx emission amount dNox, which is obtained in step S615, is added to the previous storage amount sNox.

$$\text{sNox} = \text{previous sNox} + \text{dNox} \qquad (2)$$

At step S622, the exhaust gas temperature T is read by the ECU 60 from the RAM 64. At step S625, the ECU 60 refers to a table, which is stored in the ROM 66 and shown graphically in Fig. 17, to compute a storage limit value NoxCAP. The storage limit value NoxCAP indicates the maximum amount of NOx that can be stored in the NOx catalytic converter 49 and changes in accordance with the temperature of the NOx catalytic converter 49. The exhaust gas temperature T is used as an index that indicates the temperature of the NOx catalytic converter 49.

At step S630, the ECU 60 compares the storage amount sNox with the storage limit value NoxCAP. If the storage amount sNox is less than or equal to the storage limit value NoxCAP, the ECU 60 temporarily terminates the stored NOx amount calculation routine.

If it is determined that the storage amount sNox is greater than the storage limit value NoxCAP in step S630, the ECU 60 proceeds to step S635 and sets the rich spike flag Fnox to ON. The ECU 60 then temporarily terminates the stored NOx amount calculation routine.

If it is determined that the engine operating state is in the operational range R3 and homogeneous combustion is being performed in step S610, the ECU 60 proceeds to step S645. At step S645, the ECU 60 determines whether or not the storage amount sNox is greater than zero. If the storage amount sNox is less than or equal to zero, the ECU 60 proceeds to step S675 to set the storage amount sNox to zero, and then proceeds to step S680 to set the rich spike flag Fnox to OFF. Afterward, the ECU 60 temporarily terminates the stored NOx amount calculation routine.

If is determined that the storage amount sNox is greater than zero in step S645, the ECU 60 proceeds to step S650 and reads the air fuel ratio A/F, the engine speed NE, and the intake pressure PM. If the air fuel ratio feedback control is being performed, the value of or a value approximate to the stoichiometric air fuel ratio, which is also used to compute the storage amount sNox, is used as the air fuel ratio A/F. If the large load increase OTP is being used to control the air fuel ratio so that the air fuel mixture is rich or if rich spike control is being performed, the air fuel ratio corresponding to the respective large load increase OTP or the rich spike control is used as the air fuel ratio. A value measured by the air fuel ratio sensor 88 may also be used as the air fuel ratio A/F.

At step S655, the ECU 60 refers to the map of Fig. 18 to obtain the intake air amount G per engine crankshaft revolution. At step S660, the ECU 60 refers to the map of Fig. 19 and computes the surplus fuel amount per engine crankshaft revolution. The parameters of the map of Fig. 18 are the engine speed NE and the intake pressure PM. The parameters of the map of Fig. 19 are the intake air amount G and the air fuel ratio A/F. The maps of Figs. 18 and 19 are stored in the ROM 66.

At step S665, in accordance with formula (3), the ECU 60 subtracts the product of a coefficient Ke and the surplus fuel amount ExQ from the previous storage amount sNox and updates the storage amount sNox. The coefficient ke is used to convert the surplus fuel amount ExQ to the amount of NOx that is reduced by fuel.

$$\text{sNox} = \text{previous sNox} - \text{ke} \bullet \text{ExQ} \qquad (3)$$

At step S670, the ECU 60 determines whether the updated storage amount sNox is less than or equal to zero. If the storage amount sNox is less than or equal to zero, the ECU 60 proceeds to step S675 and sets the storage amount sNox to zero. At step S680, the ECU 60 sets the rich spike flag Fnox to OFF and then temporarily terminates the stored NOx amount calculation routine. If the storage amount sNox is greater than zero in step S670, the ECU 60 temporarily terminates the stored NOx amount calculation routine.

In this manner, the storage amount sNox is estimated from the state of the exhaust gas. If the estimated storage amount sNox exceeds the storage limit value NoxCAP in step S630, the ECU 60 immediately sets the rich spike flag Fnox to ON in step S635 to enable the execution of the rich spike control.

When the rich spike flag Fnox is ON, the ECU 60 proceeds from step S210 of Fig. 9 to step S270 and sets the injection timing so that fuel is injected during the intake stroke. In other words, the combustion mode is switched to homogeneous charge combustion.

Further, when the rich spike flag Fnox is ON, the ECU 60 proceeds from step S330 of Fig. 10 to step S800 and performs rich spike control.

The rich spike control routine will now be described with reference to Fig. 20. At step S810, the ECU 60 calculates the basic fuel injection amount QBS. At step S820, the ECU 60 computes the fuel injection amount Q in accordance with formula (4).

$$Q = QBS\{1 + Knox + (KG - 1.0)\}\alpha + \beta \qquad (4)$$

The coefficient Knox is used to decrease the air fuel ratio A/F so that the air fuel mixture is rich (e.g., A/F=11.5) and set, for example, at 0.27.

As described above, when the rich spike flag Fnox is ON, the rich spike control routine is commenced and the air fuel ratio is changed so that the air fuel mixture becomes rich. This supplies the catalytic converter 49 with the unburned gas components in the exhaust gas. The unburned gas components function as reduction agents and reduce the NOx in the NOx catalytic converter 49 until the storage amount sNox becomes null.

In addition to the stored NOx amount calculation routine shown in Fig. 14, the rich spike flag Fnox is also set to ON while performing the routine shown in Fig. 21, for determining whether to execute rich spike control when terminating fuel cut. The routine of Fig. 21 is executed for every predetermined crank angle.

At step S910, the ECU 60 checks the fuel cut flag Fca. If the fuel cut flag Fca is OFF, the ECU 60 proceeds to step S920 and checks a determining flag Fcg. The determining flag Fcg is initially set at OFF. If the determining flag Fcg is OFF, the routine is temporarily terminated.

Subsequently, if the fuel cut conditions are satisfied and the fuel cut flag Fca goes ON in the fuel cut routine (Fig. 11), the ECU 60 proceeds from step S910 to step S990 and sets the determining flag Fcg to ON. In this case, as long as the fuel cut flag Fca is ON, only steps 910 and 990 are repeated in the following cycles.

Afterward, when the fuel cut conditions are no longer satisfied and the fuel cut flag Fca goes OFF, the ECU 60 proceeds from step S910 to step S920 to check the determining flag Fcg. Since the determining flag Fcg was ON in the previously performed step S990, the ECU 60 proceeds from step S920 to step S930. At step S930, the ECU 60 determines whether the fuel cut flag Fca was ON in the previous cycle of the routine. If the fuel cut flag was ON in the previous cycle, the ECU 60 proceeds to step S940 and stores the present storage amount sNox as a fuel cut termination time stored NOx amount Rnox.

At step S950, the ECU 60 uses the table shown graphically in Fig. 22 to obtain an increase margin dRnox of the stored NOx amount from the exhaust gas temperature T. The increase margin dRnox is set at a value that is smaller than the difference between the fuel cut termination time stored NOx amount Rnox and the storage limit value NoxCAP.

At step S960, the ECU 60 determines whether or not the present storage amount sNox is greater than or equal to the sum of the fuel cut termination time stored NOx amount Rnox and the increase margin dRnox in accordance with formula (5). That is, the ECU 60 determines whether the storage amount sNox has increased by the increase margin dRnox subsequent to the termination of the fuel cut control.

$$sNox \geq Rnox + dRnox \quad (5)$$

If it is determined that the present storage amount sNox is not greater than or equal to the sum of the fuel cut termination time stored NOx amount Rnox and the increase margin dRnox in step S980, the ECU temporarily terminates the routine. As long as formula (5) is not satisfied, the ECU 60 keeps repeating steps S910, S920, S930, and S960.

If, for example, stratified charge combustion or semi-stratified charge combustion is performed subsequent to the fuel cut control, the storage amount sNox increases gradually and satisfies formula (5) in step S960. In this case, the ECU 60 proceeds to step S970 and sets the rich spike flag Fnox to ON. At step S980, the ECU 60 sets the determining flag Fcg to OFF. The routine is then temporarily terminated.

When executing subsequent cycles of the routine of Fig. 21, since the fuel cut flag Fca is OFF and the determining flag Fcg is OFF, the ECU 60 continually repeats steps S910 and S920.

Accordingly, in the routine for determining whether to execute rich spike control when terminating fuel cut, the rich spike flag Fnox is set to ON using different criteria from that of the stored NOx amount calculation routine of Fig. 14. When the rich spike flag Fnox is ON, the rich spike control is commenced.

In the first embodiment, steps S320, S325, S500, S510, and S520 are used for controlling fuel cut, steps S910, S930, S950 are used to set the increase margin, and steps S330, S800, S960, and S970 are used to reduce the stored NOx.

The first embodiment has the advantages described below.

(a) The increase margin dRnox is set (step S950) when terminating the fuel cut control (steps S910-S930). The increase margin dRnox differs from the storage limit value NoxCAP used in the stored NOx amount calculation routine (Fig. 14) in that it is a value relative to the storage amount. In addition, when fuel cut is terminated, the increase margin dRnox is smaller than the difference between the stored NOx amount Rnox and the storage limit value NoxCAP, which corresponds to the exhaust gas temperature T.

If the increase amount of the storage amount sNox after terminating fuel cut is greater than the increase margin dRnox (step S960), the ECU 60 executes the rich spike control routine (Fig. 20). The execution of the rich spike control routine continues until the storage amount becomes null.

Accordingly, the timing for executing the rich spike control routine (step S800) subsequent to the fuel cut control is determined using the increase margin dRnox as a reference value instead of the NOx storage limit NoxCAP, which temporarily becomes inaccurate when performing fuel cut control. In addition, the increase margin dRnox is not an absolute value like the NOx storage limit NoxCAP and indicates the relative relation with the storage amount sNox.

Since the increase in the storage amount sNox subsequent to termination of the fuel cut control is determined using the increase margin dRnox, which is a relative value, the rich spike control (S800) is executed at an optimal time before the storage amount sNox becomes greater than the storage limit NoxCAP. This inhibits the emission of NOx when the NOx catalytic converter 49 is saturated and prevents undesirable emissions.

(b) The rich spike control (S800) is executed subsequent to the fuel cut control when the increase in the storage amount sNox exceeds the increase margin dRnox. That is, the rich spike control is not executed immediately after the fuel cut control. Thus, for example, if low load operation is continued for a time subsequent to the fuel cut control, torque fluctuation shocks produced when shifting from fuel cut control (output torque being null) to rich spike control (output torque being greater than zero) is prevented.

(c) The increase margin dRnox is set in accordance with the exhaust gas temperature T (step S950). This executes rich spike control (S800) when the storage amount sNox produces a state extremely close to saturation of the NOx catalytic converter 49. This further effectively prevents the torque fluctuation shocks while preventing undesirable shocks.

[Second Embodiment]

In the second embodiment, instead of executing the routine of Fig. 21, a routine shown in Fig. 23 is executed to perform rich spike control when fuel cut is terminated.

The routine of Fig. 23 is executed cyclically in constant intervals. First, at step S1010, the ECU 60 determines whether or not the fuel cut flag Fca is OFF. If the fuel cut flag Fca is OFF, the ECU 60 proceeds to step S1020 and determines whether or not the fuel cut flag Fca was ON during the previous cycle.

If it is determined that the previous fuel cut flag Fca was OFF in step 1020, the ECU 60 temporarily terminates the routine. As long as the fuel cut flag Fca remains OFF, the ECU 60 keeps repeating steps S1010 and S1020 in subsequent cycles of the routine.

If the fuel cut conditions are satisfied in the fuel cut routine (Fig. 11) causing the fuel cut flag Fca to go ON, the ECU 60 temporarily terminates the routine in step S1010. As long as the fuel cut flag Fca remains ON, the ECU 60 performs only step S1010 when executing the subsequent cycles of the routine.

When the fuel cut conditions are no longer satisfied and the fuel cut flag Fca goes OFF, the ECU 60 proceeds from step S1010 to step S1020 and determines whether the fuel cut flag Fca was ON in the previous cycle. Since the previous fuel cut flag Fca was ON, the ECU 60 proceeds to step S1030 and sets the rich spike flag Fnox to ON. The ECU 60 then temporarily terminates the routine.

In the next cycle of the routine, the present and previous fuel cut flags Fca are both OFF. Thus, the ECU 60 returns to the state in which it performs only steps S1010 and S1020 when executing subsequent cycles of the routine.

In this manner, the rich spike flag Fnox is set to ON immediately after terminating the fuel cut control.

In the second embodiment, steps S320, S325, S500, S510, and S520 are used for controlling fuel cut and the routine of Fig. 23 is used to reduce the stored NOx amount.

The second embodiment has the advantage described below.

When fuel cut control is terminated, the ECU 60 immediately performs the rich spike control routine (S1030). This immediately reduces the storage amount of NOx when the fuel cut control is terminated. The emission of NOx caused by saturation of the NOx catalytic converter 49 is thus prevented. Therefore, undesirable emissions are not produced.

The first and second embodiments may be modified as described below.

An operational range in which lean homogeneous charge combustion is performed may be set.

The engine may be a spark ignition type that injects fuel toward the intake port. In this case, lean combustion is performed as homogeneous charge combustion.

The exhaust gas temperature T may be estimated from a map using the parameters of the intake pressure PM and the engine speed NE.

It should be apparent to those skilled in the art that the present invention may be embodied in many other specific forms without departing from the spirit or scope of the invention. Therefore, the present examples and embodiments are to be considered as illustrative and not restrictive, and the invention is not to be limited to the details given herein, but may be modified within the scope and equivalence of the appended claims.

An exhaust gas purification apparatus (60) estimates the amount (sNox) of NOx stored in a NOx catalytic converter (49) arranged in an exhaust passage (48) of an engine (2), based on an operating state of the engine. When the amount of stored NOx is greater than a predetermined storage limit (NoxCAP), the concentration of fuel in the air fuel mixture is increased so that the fuel concentration becomes higher than that of a stoichiometric mixture in order to reduce the amount of stored NOx. The apparatus includes a fuel cutting means (60, 22) that cuts the supply of fuel to the engine based on the operating state of the engine. A stored NOx reduction means (60, 22, 46) temporarily increases the fuel concentration of the air fuel mixture so that the fuel concentration becomes higher than that of a stoichiometric mixture at one point in a period from when the fuel cut is terminated to just before the stored amount of NOx exceeds the predetermined storage limit.

## Claims

**1.** An engine exhaust gas purification apparatus (60) that estimates the amount (sNox) of NOx stored in a NOx catalytic converter (49), which is arranged in an exhaust passage (48) of an engine (2), based on an operating state (T, NE, ACCP, PM, THW, Vox, TA, FAF, KG) of the engine, and when the stored NOx amount is greater than a predetermined storage limit (NoxCAP), temporarily increases the concentration of fuel in an air fuel mixture so that the fuel concentration becomes higher than that of a stoichiometric mixture to reduce the stored NOx amount, the apparatus being characterized by:

> a fuel cutting means (60, 22, S320, S325, S500, S510, and S520) for cutting the supply of fuel to the engine in accordance with the operating state of the engine; and
> an stored NOx reduction means (60, 22, 46, S330, S800, S960, and S970) for temporarily increasing the fuel concentration of the air fuel mixture so that the fuel concentration becomes higher than that of a stoichiometric mixture at one point in a period from when the fuel cut is terminated to just before the stored NOx amount exceeds the predetermined storage limit.

**2.** The exhaust gas purification apparatus according to claim 1, characterized in that the one point is when the fuel cut is terminated.

**3.** The exhaust gas purification apparatus according to any one of the preceding claims, further characterized by an increase margin setting means (60, S910, S930, S950) for setting an increase margin (dRnox) of the stored NOx amount that is smaller than a difference between the stored NOx amount when the fuel cut is terminated and the predetermined storage limit, wherein the stored NOx reduction means temporarily increases the fuel concentration of the air fuel mixture so that the fuel concentration becomes higher than that of a stoichiometric mixture when an increase in the stored NOx amount becomes higher than the increase margin.

**4.** The exhaust gas purification apparatus according to claim 3, wherein the stored NOx reduction means sets the increase margin in accordance with the exhaust gas temperature (T).

**5.** A method for purifying exhaust gas in an engine (2) provided with a NOx catalytic converter (49), the method being characterized by:

> estimating the amount of NOx in the NOx catalytic converter based on an operating state (T, NE, ACCP, PM, THW, Vox, TA, FAF, KG) of the engine;
> a first enriching step (S800) for temporarily increasing the concentration of fuel in an air fuel mixture so that the fuel concentration becomes higher than that of a stoichiometric mixture when the stored NOx amount is greater than a predetermined storage limit (NoxCAP);
> cutting (S320, S325, S500, S510, and S520) the supply of fuel to the engine in accordance with the operating state of the engine; and
> a second enriching step (S330, S800, S960, and S970) for temporarily increasing the fuel concentration of the air fuel mixture so that the fuel concentration becomes higher than that of a stoichiometric mixture at one point in a period from when the fuel cutting step is terminated to just before the amount of stored NOx exceeds the predetermined storage limit.

**6.** The method according to claim 5, characterized in that the one point in the second enriching step is when the fuel cutting step is terminated.

**7.** The method according to any one of claims 5 and 6, further characterized by a step for setting (S950) an increase margin (dRnox) of the stored NOx amount that is smaller than a difference between the stored NOx amount immediately after the fuel cutting step is terminated and the predetermined storage limit, wherein the second enriching step temporarily increases the fuel concentration of the air fuel mixture so that the fuel concentration becomes higher than that of a stoichiometric mixture when an increase in the stored NOx amount becomes higher than the increase margin.

**8.** The method according to claim 7, characterized in that the setting step sets the increase margin in accordance with the exhaust gas temperature (T).

# Fig.1

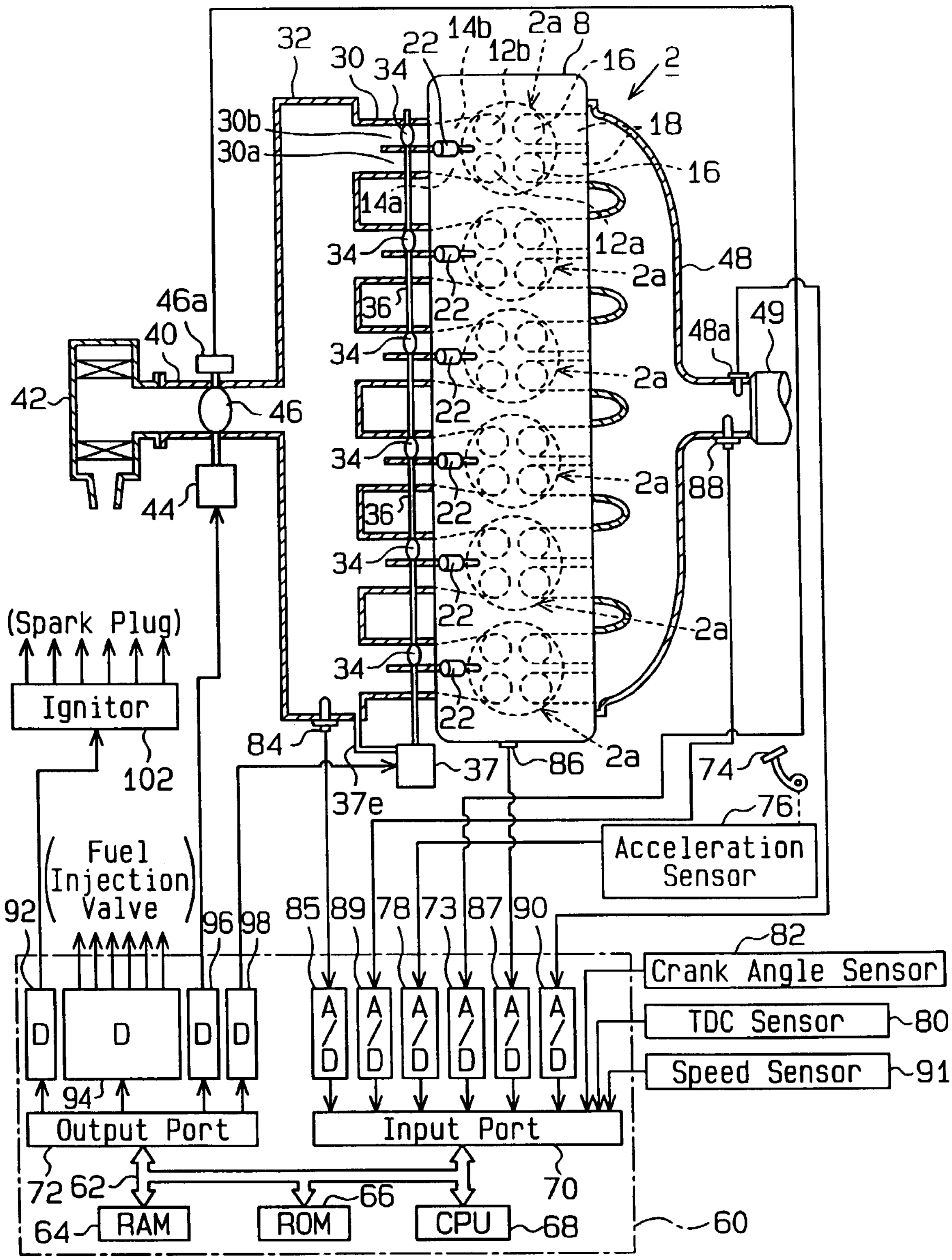

(Spark Plug)
Ignitor
Fuel Injection Valve
Acceleration Sensor
Crank Angle Sensor
TDC Sensor
Speed Sensor
Output Port
Input Port
RAM
ROM
CPU
D
A/D

Fig.2

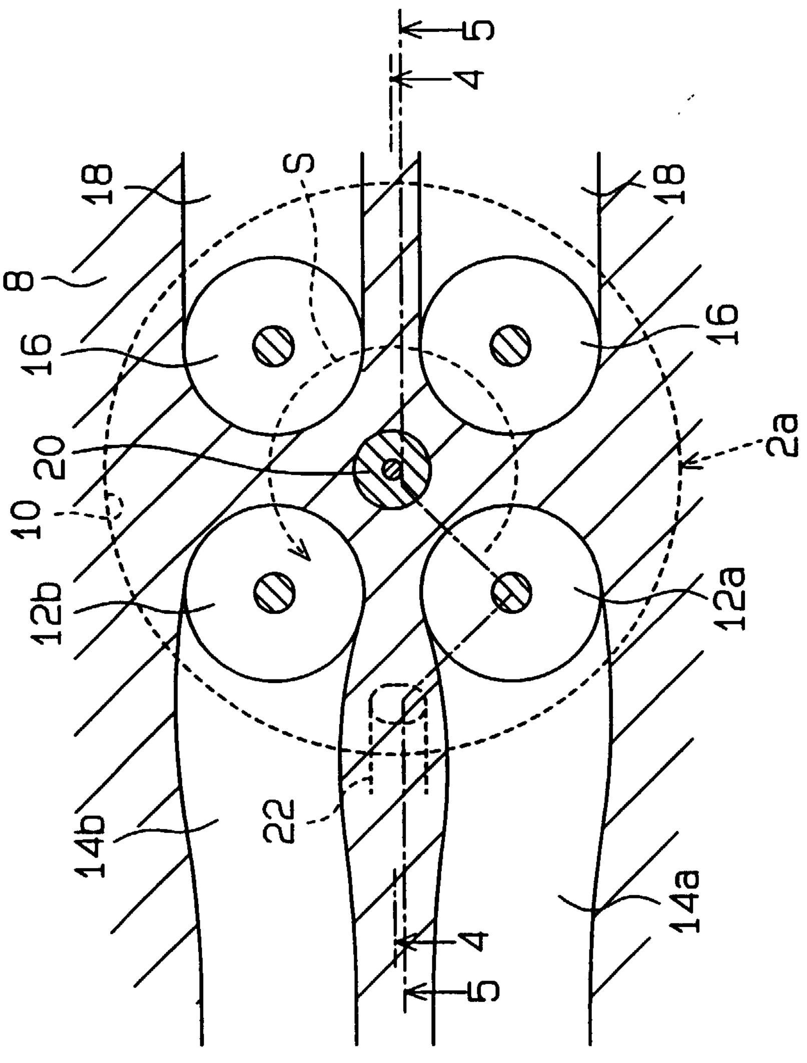

# Fig.3

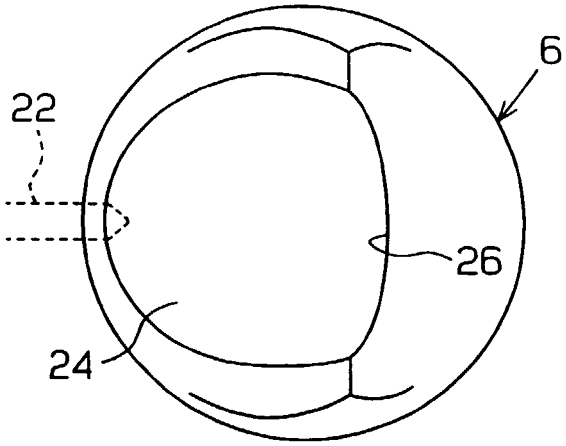


# Fig.4

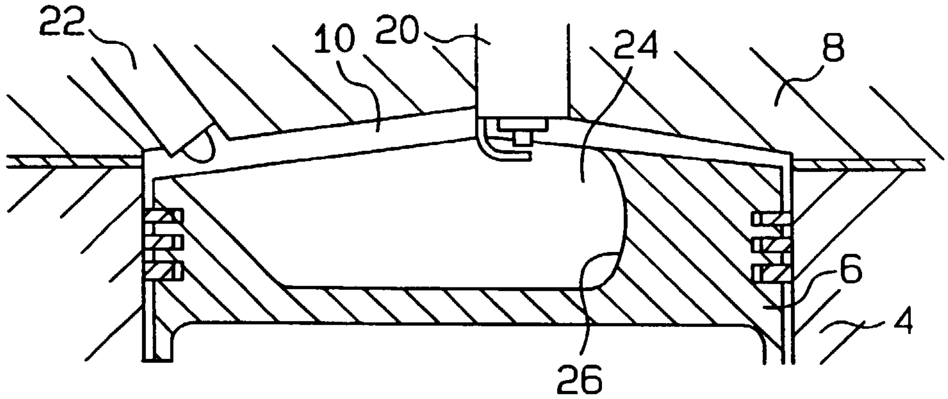


# Fig.5

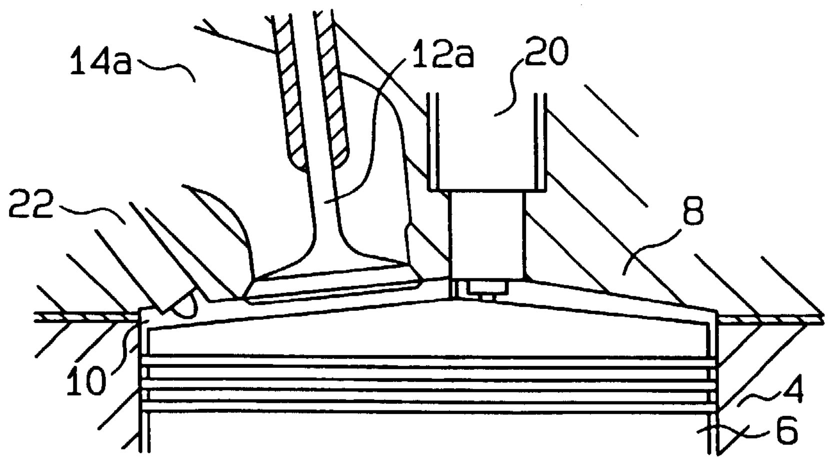

Fig.6

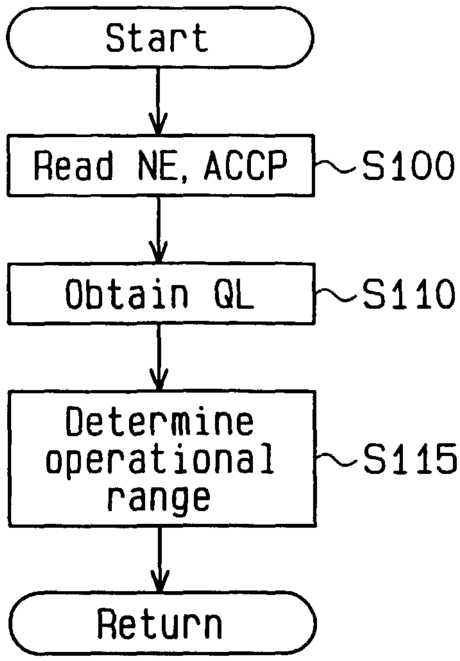
Start
Read NE, ACCP
S100
Obtain QL
S110
Determine operational range
S115
Return

Fig.7

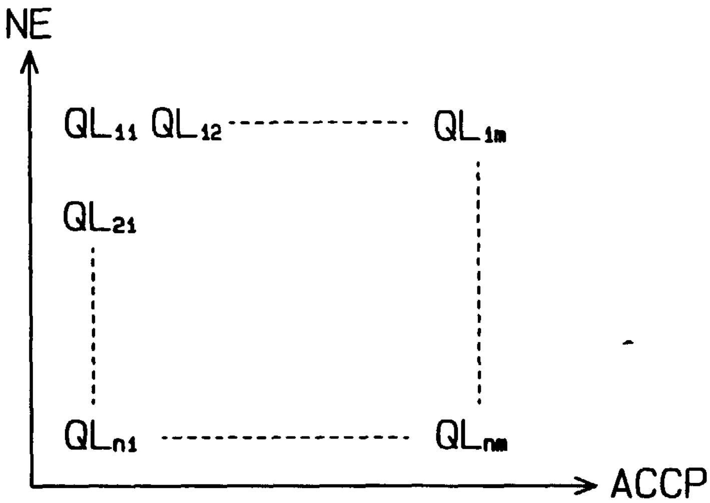
NE
QL11 QL12
QL1m
QL21
QLn1
QLnm
ACCP

Fig.8

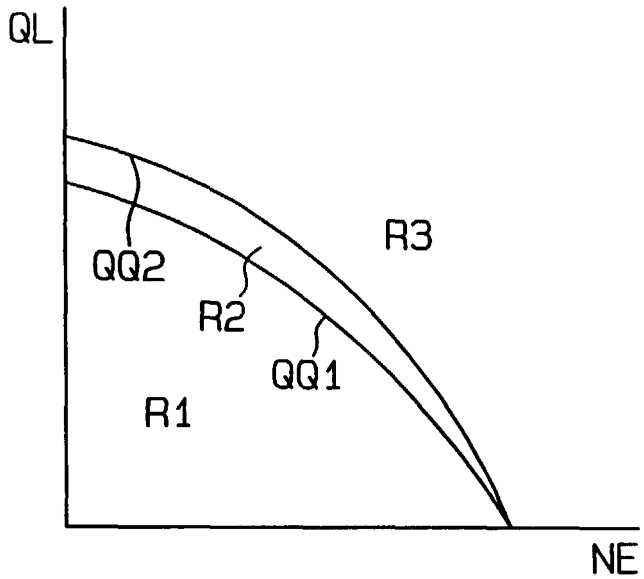

Fig.9

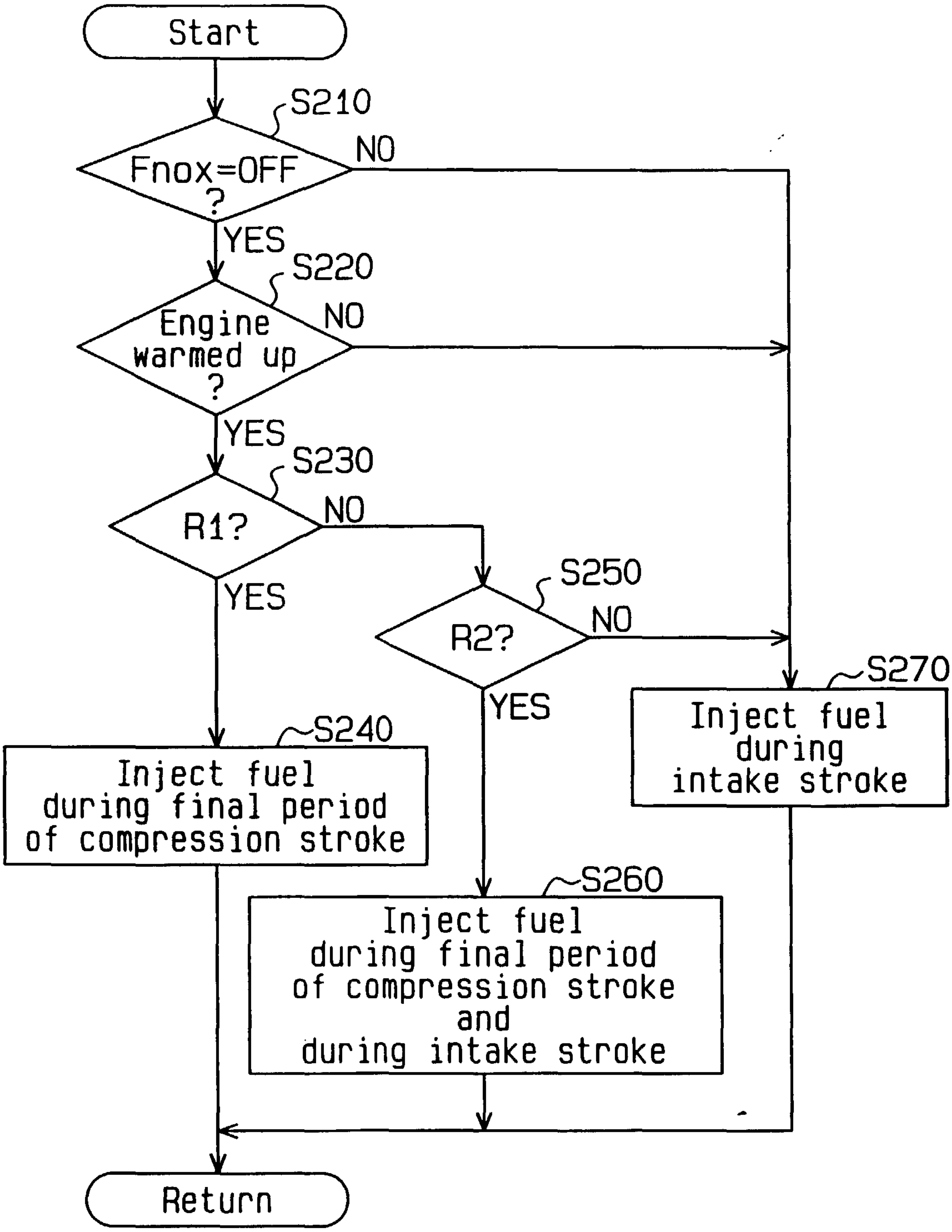
Start
S210
Fnox=OFF ?
NO
YES
S220
Engine warmed up ?
NO
YES
S230
R1?
NO
YES
S250
R2?
NO
YES
S270
Inject fuel during intake stroke
S240
Inject fuel during final period of compression stroke
S260
Inject fuel during final period of compression stroke and during intake stroke
Return

# Fig.10

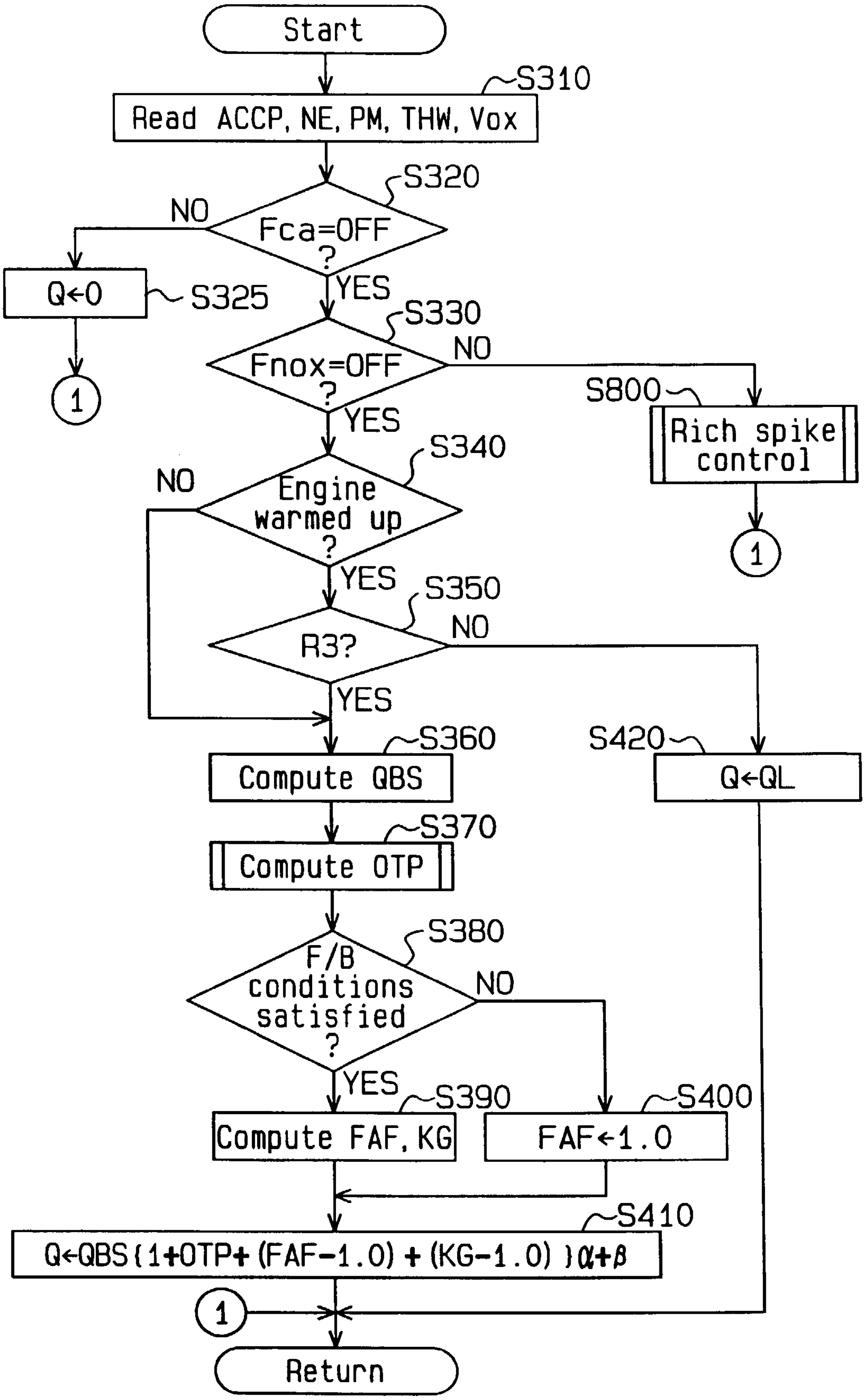
Start
S310
Read ACCP, NE, PM, THW, Vox
S320
Fca=OFF ?
NO
YES
Q←0
S325
1
S330
Fnox=OFF ?
NO
YES
S800
Rich spike control
1
S340
Engine warmed up ?
NO
YES
S350
R3?
NO
YES
S360
Compute QBS
S420
Q←QL
S370
Compute OTP
S380
F/B conditions satisfied ?
NO
YES
S390
Compute FAF, KG
S400
FAF←1.0
S410
Q←QBS{1+OTP+(FAF−1.0)+(KG−1.0)}α+β
1
Return

# Fig.11

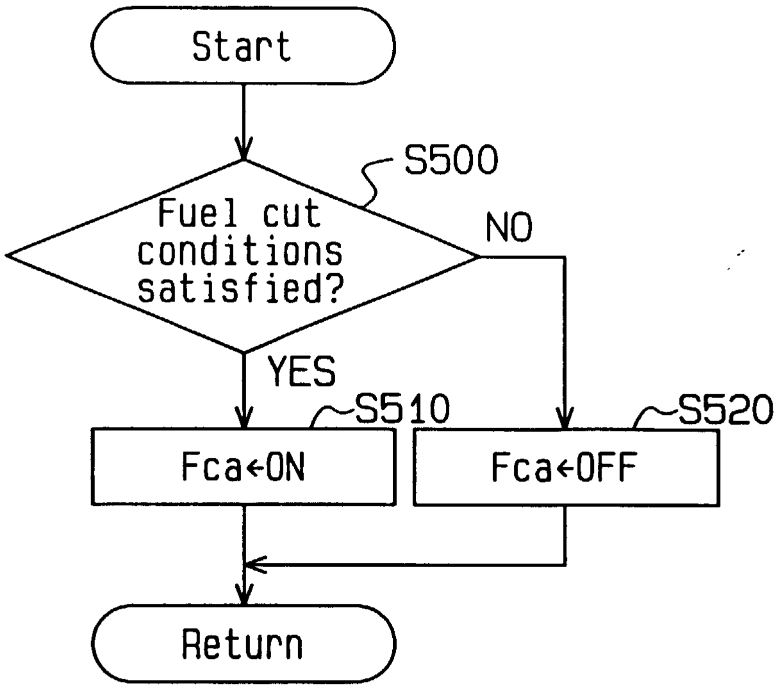
Start
S500
Fuel cut conditions satisfied?
NO
YES
S510
S520
Fca←ON
Fca←OFF
Return

Fig.12

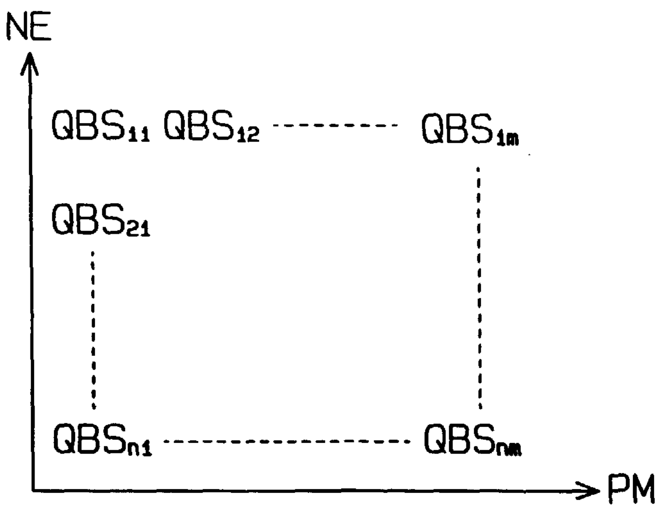
NE
QBS11 QBS12 QBS1m
QBS21
QBSn1 QBSnm
PM

Fig.13

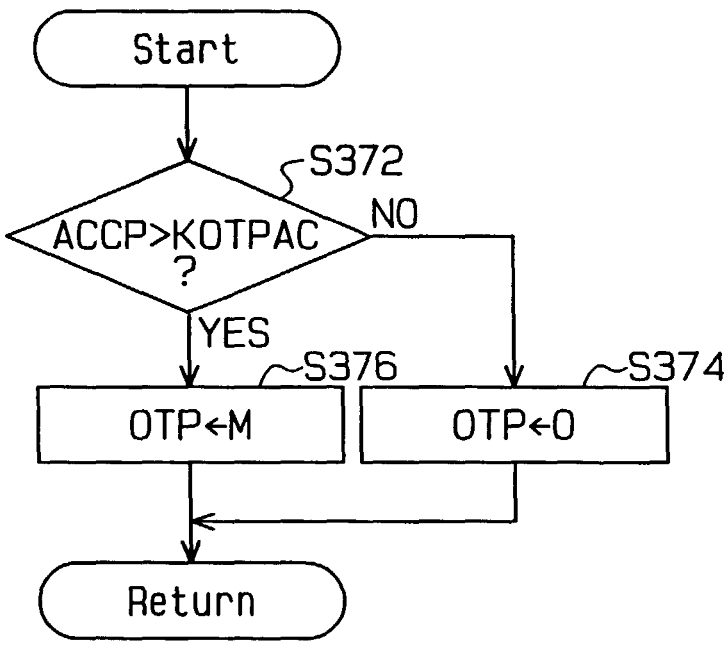
Start
S372
ACCP>KOTPAC ?
NO
YES
S376
S374
OTP←M
OTP←0
Return

# Fig.14

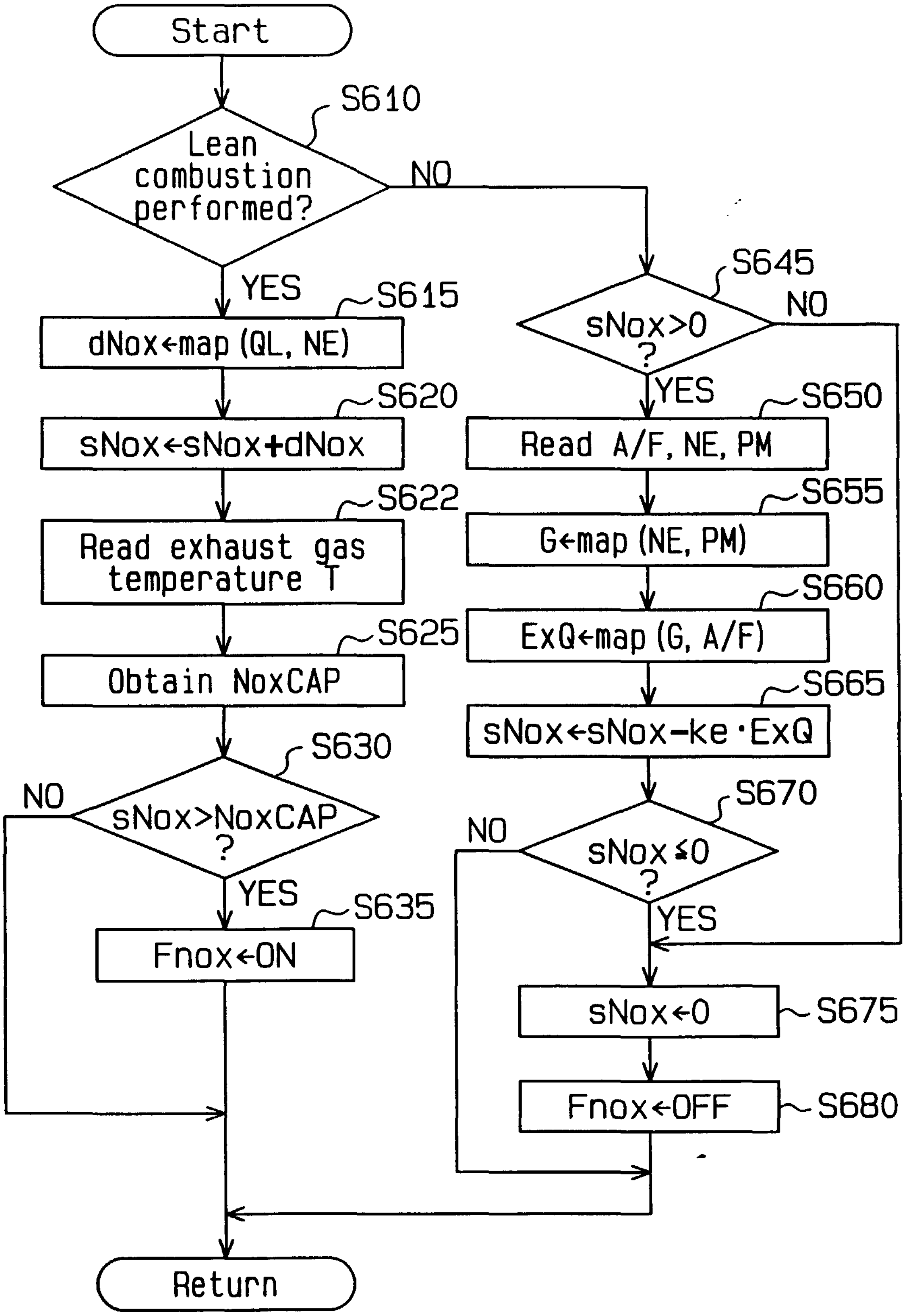
Start
S610
Lean combustion performed?
NO
YES
S615
dNox←map (QL, NE)
S620
sNox←sNox+dNox
S622
Read exhaust gas temperature T
S625
Obtain NoxCAP
S630
sNox>NoxCAP ?
NO
YES
S635
Fnox←ON
S645
sNox>0 ?
NO
YES
S650
Read A/F, NE, PM
S655
G←map (NE, PM)
S660
ExQ←map (G, A/F)
S665
sNox←sNox−ke·ExQ
S670
sNox≤0 ?
NO
YES
sNox←0
S675
Fnox←OFF
S680
Return

Fig.15

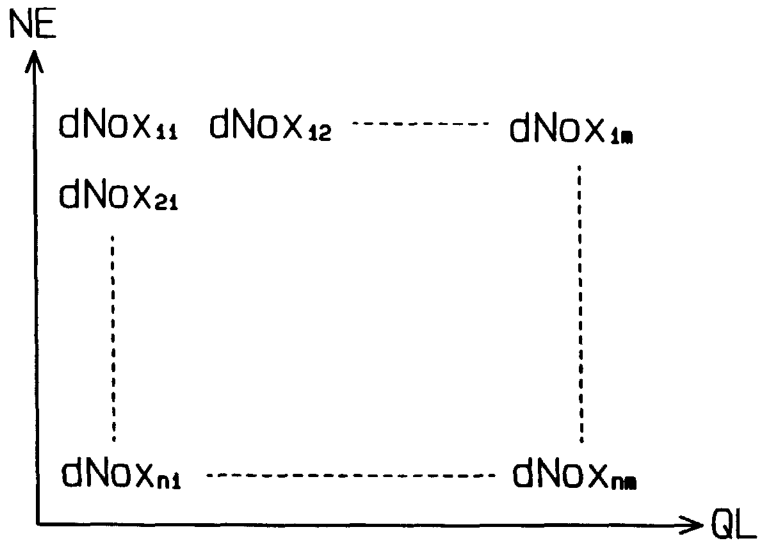
NE
dNox11
dNox12
dNox1m
dNox21
dNoxn1
dNoxnm
QL

Fig.16

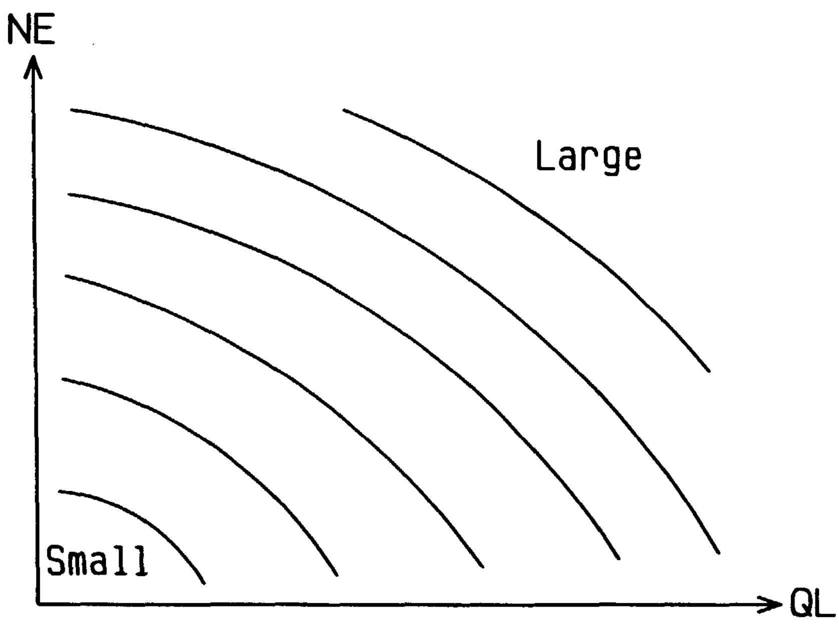
NE
Large
Small
QL

# Fig.17

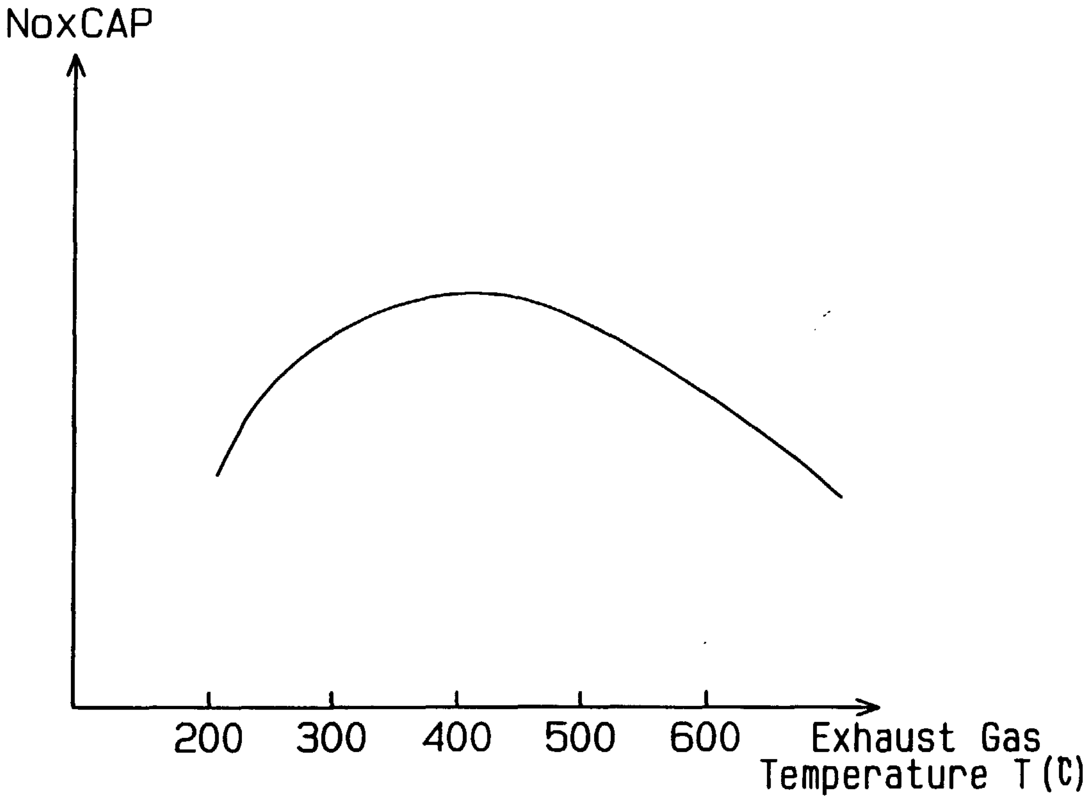
NoxCAP
200
300
400
500
600
Exhaust Gas
Temperature T (℃)

# Fig.18

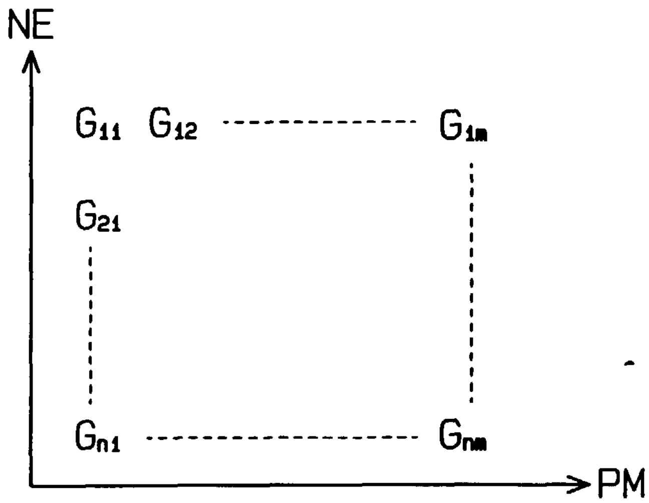
NE
G11 G12
G1m
G21
Gn1
Gnm
PM

Fig.19

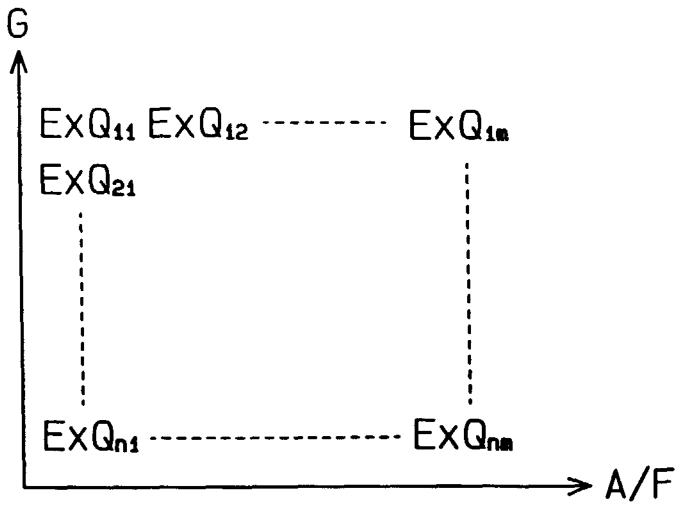
G
ExQ11 ExQ12 ExQ1m
ExQ21
ExQn1 ExQnm
A/F

Fig.20

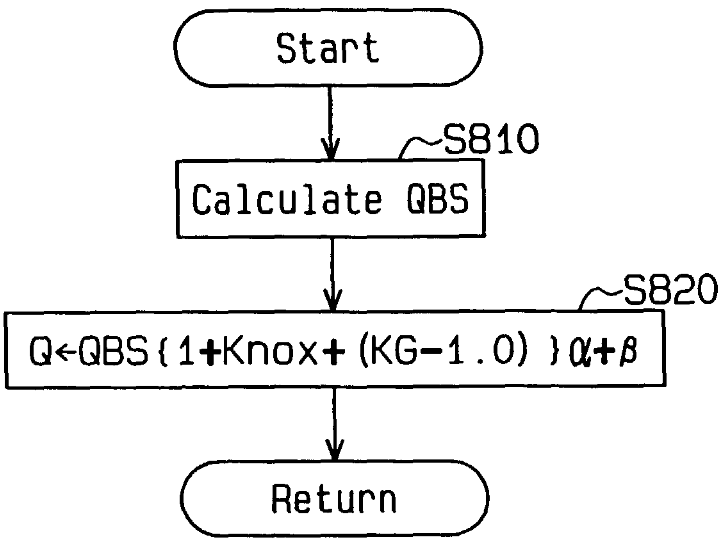
Start
S810
Calculate QBS
S820
Q←QBS{1+Knox+(KG−1.0)}α+β
Return

# Fig.21

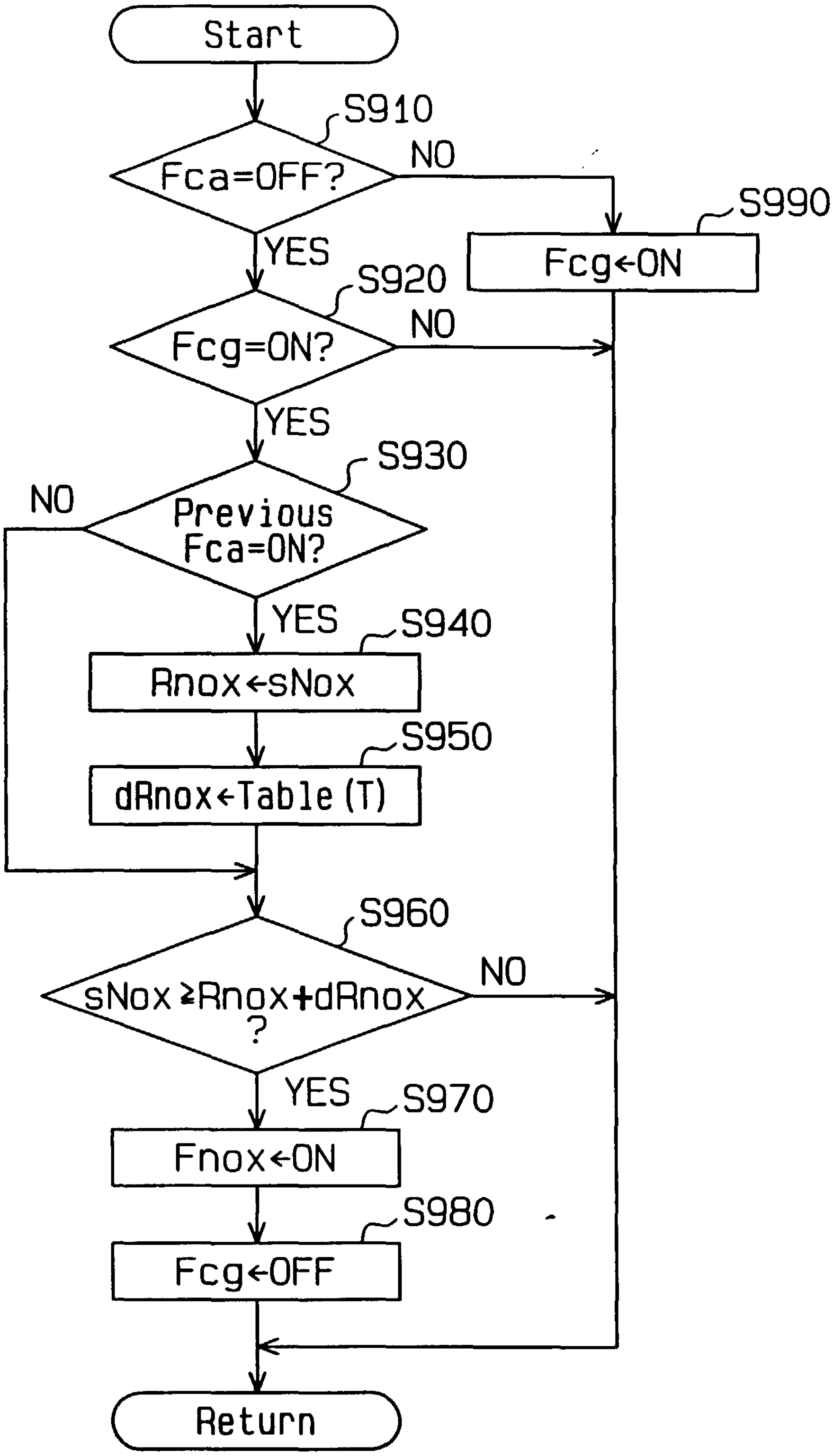

Start
S910
Fca=OFF?
NO
YES
S990
Fcg←ON
S920
Fcg=ON?
NO
YES
S930
NO
Previous Fca=ON?
YES
S940
Rnox←sNox
S950
dRnox←Table (T)
S960
sNox ≥ Rnox+dRnox ?
NO
YES
S970
Fnox←ON
S980
Fcg←OFF
Return

# Fig.22

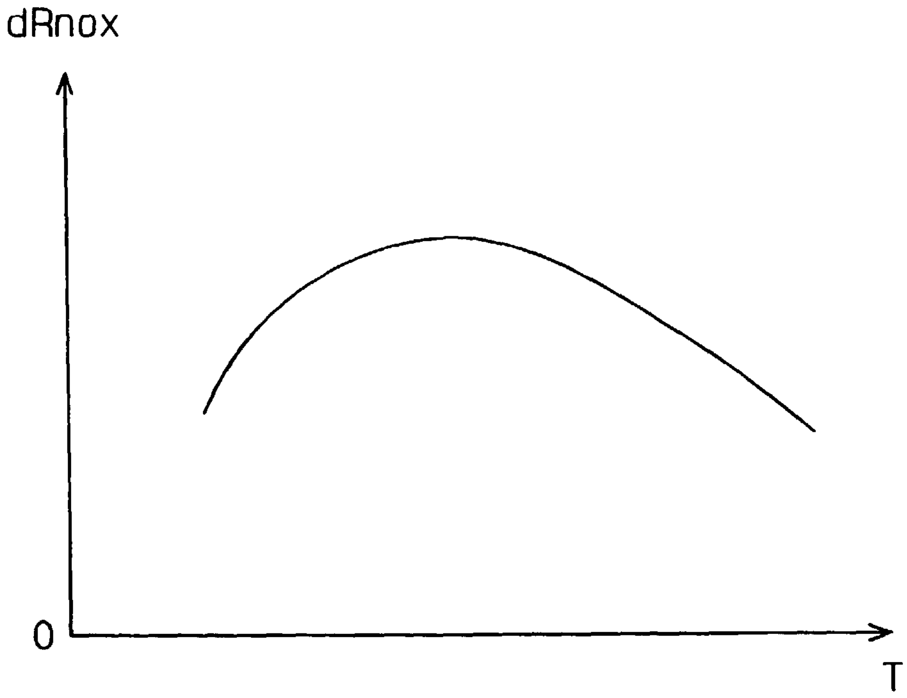
dRnox
0
T

# Fig.23

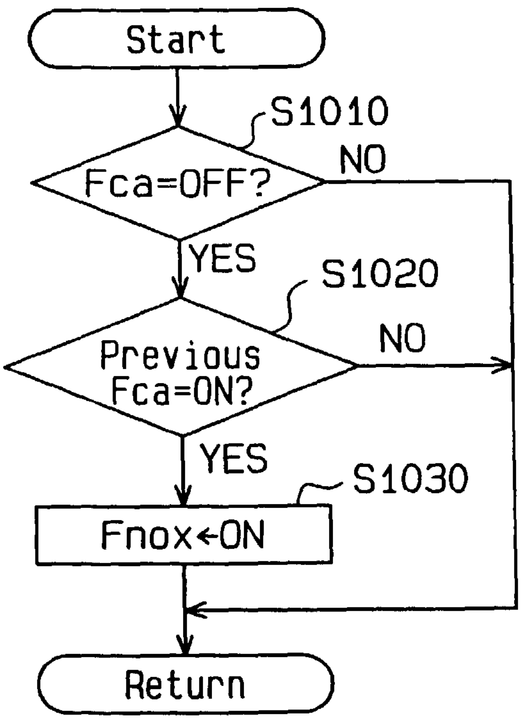
Start
S1010
Fca=OFF?
NO
YES
S1020
Previous
Fca=ON?
NO
YES
S1030
Fnox←ON
Return